# EUROPÄISCHE PATENTSCHRIFT

(11) **EP 1 103 724 B1**
(45) Veröffentlichungstag und Bekanntmachung des Hinweises auf die Patenterteilung: **26.01.2005**
(21) Anmeldenummer: 00890332.0
(22) Anmeldetag: 09.11.2000
(51) Int. Cl.: F04D 7/06, F04D 3/00, F04D 29/04, F04D 29/06, F04D 15/00

(54) **Axialpumpe zum Fördern von Metallschmelzen**
Axial-pump for conveying molten metals
Pompe axiale pour le refoulement de métaux en fusion

(30) Priorität: 24.11.1999 AT 199199
(43) Veröffentlichungstag der Anmeldung: 30.05.2001
(73) Patentinhaber: ING. RAUCH FERTIGUNGSTECHNIK GESELLSCHAFT m.b.H., 4810 Gmunden (AT)
(72) Erfinder: Rauch, Erich, 4810 Gmunden (AT); Ehrentraut, Otto, 4810 Gmunden (AT); Sigmund, Alfred Dr., 4810 Gmunden (AT)
(74) Vertreter: Hübscher, Gerhard, Dipl.-Ing.

(56) Entgegenhaltungen:
- DE-C- 903 054
- SU-A- 773 312
- PATENT ABSTRACTS OF JAPAN vol. 008, no. 210 (M-328), 26. September 1984 (1984-09-26) & JP 59 099112 A (MITSUBISHI JUKOGYO KK), 7. Juni 1984 (1984-06-07)

## Beschreibung

Die Erfindung bezieht sich auf eine Axialpumpe zum Fördern von Metallschmelzen mit einem in die Schmelze eintauchenden Pumpenrohr und einer innerhalb des Pumpenrohres verlaufenden Pumpenwelle, wobei die einen schaufelbestückten Pumpenrotor tragende Pumpenwelle im rotorseitigen Endbereich über ein Gleitlager gelagert ist, das einen innenseitigen Lagerabschnitt des Pumpenrohres und einen unter Freihaltung eines Lagerspaltes in den Lagerabschnitt eingreifenden, zum Rotor koaxialen und die Rotorschaufeln außen umschließenden Lagerring umfaßt.

Axialpumpen mit einer Pumpenwellenlagerung im Pumpenrohr über einen die Schaufeln des Pumpenrotors außen umschließenden Lagerring sind aus der SU 77 33 12, der SU 87 90 31 oder auch der US 1 391 799 A bekannt und bringen gegenüber herkömmlichen Pumpenwellenlagerungen mittels eines endseitigen Lagerkörpers der Pumpenwelle und eines zugeordneten stirnseitigen Gleitlagers des Pumpenrohres und den damit erforderlichen Ansaugöffnungen für das Fördermedium zwischen dem Wellenlager und dem Pumpenrotor und den sich ergebenden vergleichsweise kleinen Lagerabmessungen günstigere Voraussetzungen hinsichtlich der Strömungsverhältnisse des Fördermediums, der Lagerungsbedingungen und des Verschleißverhaltens mit sich. Allerdings sind die Lagerringe bzw. die Lagerabschnitte des Pumpenrohres bisher mit glatten zylindrischen Gleitflächen ausgestattet, um die Wirkung eines hydrodynamischen Gleitlagers unter Verwendung des Fördermediums als Schmierstoff zu erreichen. Aufgrund der hängenden Anordnung der Axialpumpe kommt es aber im Wellenlager zu keiner eindeutig ausgerichteten Radialbelastung, so daß sich auch gemäß der hydrodynamischen Lagertheorie kein stabiler Schmierkeil ausbilden kann und damit nicht nur die gleichmäßige Lagerschmierung gefährdet ist, sondern auch ein Hin- und Herpendeln der Pumpenwelle innerhalb der durch das Lagerspiel gegebenen Grenzen auftritt, was zu einem unruhigen Lauf, zu Schwingungserscheinungen und einem erhöhten Verschleiß führt. Diese Laufunruhe und die damit verbundenen Schwankungen in der Förderleistung schränken insbesondere die Einsatzmöglichkeiten dieser Pumpen als Dosierpumpen stark ein, für die eine hohe Wiederholungsgenauigkeit der Förderleistung entscheidend ist. Bekannte Maßnahmen, wie das Ausbilden von Durchströmöffnungen im Lagerring (SU 77 33 12 und SU 87 90 31) oder die Anordnung von schraubenlinienförmig verlaufenden Umfangsnuten im Lagerabschnitt des Pumpenrohres (US 1 391 799 A) dienen zwar zur verstärkten Fördermediumzufuhr in den Lagerspalt und zur Verteilung des Fördermediums innerhalb des Spaltes, aber es ist dadurch nicht möglich, den Lagerring gegenüber dem Lagerabschnitt zu stabilisieren und für die gewünschte Laufruhe der Pumpenwelle zu sorgen.

Der Erfindung liegt daher die Aufgabe zugrunde, eine Axialpumpe der eingangs geschilderten Art zu schaffen, die sich durch eine einwandfreie, stabile, laufruhige und unempfindliche Lagerung der Pumpenwelle sowie durch optimale Strömungsverhältnisse auszeichnet und sich wegen ihrer Wartungsfreundlichkeit, Verschleißunempfindlichkeit und fein einstellbarer Förderleistung bestens zur Schmelzenförderung und zur Schmelzendosierung eignet.

Die Erfindung löst diese Aufgabe dadurch, daß der Lagerring und/oder der Lagerabschnitt profilierte Gleitflächen aufweisen, welches Gleitflächenprofil in der Art eines Mehrflächengleitlagers ausgebildet ist.

Die Gleitflächenprofile eines Mehrflächengleitlagers können durch regelmäßig um den Umfang verteilte Abflachungen, unterschiedliche Krümmungsbereiche, rinnenförmige Ausnehmungen u. dgl. gebildet sein, wobei die einzelnen sich über den Umfang wiederholenden Profilausformungen jeweils für sich Schmierkeile innerhalb des Lagerspaltes entstehen lassen, die bei Wellendrehung auch entsprechende Schmiermitteldrücke aufbauen, so daß der Lagerring durch diese um den Umfang verteilten Schmiermitteldruckkräfte gewissermaßen eingespannt und gegenüber dem Lagerabschnitt zentriert bzw. stabilisiert wird. Es kommt auch bei einer Schmelzenförderpumpe mit der Schmelze als Schmiermittel zu einer Pumpenwellenlagerung in Form eines Mehrflächengleitlagers mit allen seinen Vorteilen, wodurch vor allem eine exakte Wellenführung bei großer Laufruhe gewährleistet ist. Darüber hinaus entsteht eine Gleitlagerung mit in Bezug auf die Pumpenrohrabmessungen größtmöglichem Lagerdurchmesser und somit größtmöglicher Tragfähigkeit. Die relativ großen Abmessungen erlauben bei gleichem relativen Lagerspiel größere Fertigungstoleranzen und bewirken auch, nicht zuletzt wegen der bei gleicher Drehzahl wesentlich höheren Umfangsgeschwindigkeit im Lager, eine höhere Unempfindlichkeit gegen Verschleiß, wobei durch den außen liegenden Lagerring die Strömung im Ansaugbereich der Pumpe in keiner Weise mehr gestört wird. Diese Lageranordnung verlängert somit die Lebensdauer der Pumpenwellenlagerung erheblich und führt zu einer einfachen, robusten und wartungsfreundlichen Bauweise.

Ein kleiner Teilstrom des Fördermediums, der gleichzeitig als Schmiermittel in der Lagerung den Schmierfilm bildet, strömt durch das Gleitlager in den Ansaugbereich der Pumpe zurück. Diese Rückströmung kann dadurch begrenzt werden, daß im saugseitigen Randbereich des Laufringes und/oder des Lagerbereiches im Pumpenrohr zwischen Laufring und Lagerabschnitt eine Dichtung, insbesondere eine Labyrinthdichtung, eingesetzt ist.

Weist der Lagerabschnitt des Pumpenrohres Abflußöffnungen, insbesondere im Dichtungsbereich, auf, kann die Rückströmung in den Ansaugbereich der Pumpe ohne Beeinträchtigung der Lagerschmierung im wesentlichen eliminiert werden.

Ist dem lagerringbestückten Pumpenrotor wenigstens ein zusätzlicher, gegebenenfalls lagerringfreier Pumpenrotor zugeordnet, entsteht wahlweise eine ein- oder mehrstufige Axialpumpe, deren Förderleistung und Strömungsverhältnisse sich gut an die jeweiligen Anforderungen anpassen lassen.

Die Axialpumpe wird meist als Saugpumpe Verwendung finden, bei der der Pumpenrotor mit aufwärts gerichtetem Fördersinn im Pumpenrohr sitzt, wodurch Schmelze aus einem Behälter angesaugt und nach oben über einen Überlauf entleert wird. Es ist aber durchaus auch möglich, den Pumpenrotor mit abwärts gerichtetem Fördersinn in das Pumpenrohr einzusetzen, so daß die Pumpe mittels einer am freien unteren Ende des Pumpenrohres anschließenden Druckleitung als Druckpumpe zur direkten Füllung einer Gießform u. dgl. dienen kann.

Um die Axialpumpe entsprechend betreiben und dabei vor allem die Fördermenge, Fördergenauigkeit und Fördercharakteristik an die jeweiligen Anforderungen des Förderbetriebes anpassen zu können, ist der Pumpenrotor mit veränderbarer Drehzahl oder mit über eine Förderperiode gesteuertem Drehzahlverlauf antreibbar, wodurch auch die in der Anfangs- und/oder Endphase einer Förderperiode auftretenden bzw. gewünschten Förderverhältnisse berücksichtigt werden können.

Durch den Einsatz von Rotoren mit symmetrischen Propellerprofilen und geeigneter Antriebe und Lagerungen kann die erfindungsgemäße Axialpumpe für Sonderfälle, beispielsweise als reine Umwälzpumpe, auch umsteuerbar ausgestaltet sein.

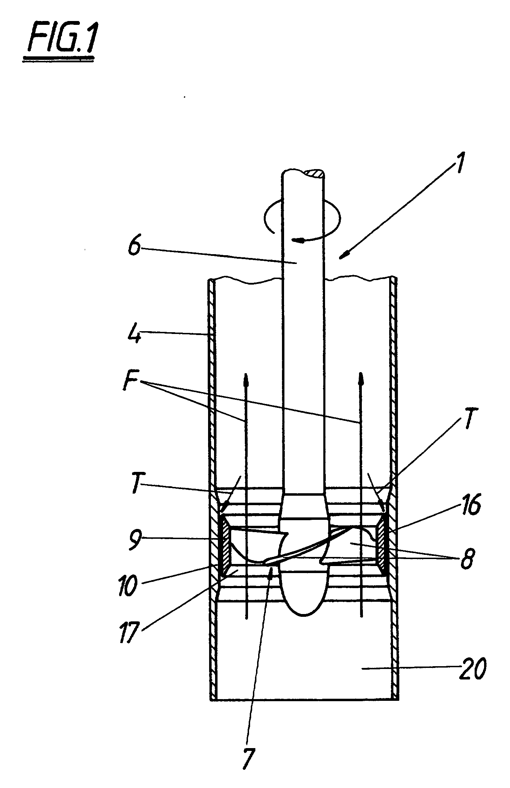

In der Zeichnung ist der Erfindungsgegenstand beispielsweise veranschaulicht, und zwar zeigen
- Fig. 1: das Konstruktionsprinzip einer erfindungsgemäßen Axialpumpe im Axialschnitt,
- Fig. 2 und 3: eine erfindungsgemäße Axialpumpe im Saug- bzw. Druckpumpenbetrieb anhand jeweils eines teilgeschnittenen Anlagenschemas,
- Fig. 4 und 5: zwei Ausführungsbeispiele einer erfindungsgemäßen Axialpumpe jeweils im Axialschnitt und
- Fig. 6 und 7: das Funktionsschema des Pumpenwellenlagers der erfindungsgemäßen Axialpumpe für zwei Ausführungsbeispiele jeweils in einem achsnormalen Querschnitt,

Eine Axialpumpe 1 zum Fördern von Metallschmelzen weist ein in das Schmelzenbad 2 eines nur angedeuteten Schmelzenofens 3 eintauchendes Pumpenrohr 4 und eine innerhalb des Pumpenrohres 4 verlaufende, über einen Antriebsmotor 5 antreibbare Pumpenwelle 6 mit einem schaufelbestückten Pumpenrotor 7 auf, wobei als Pumpenrotor 7 ein Propeller dient und die Pumpenwelle 6 im rotorseitigen Endbereich des Pumpenrohres 4 gelagert ist. Der Pumpenrotor 7 ist mit einem die Rotorschaufeln 8 außen umschließenden koaxialen Lagerring 9 ausgestattet, der zusammen mit einem innenseitigen Lagerabschnitt 10 des Pumpenrohres 4 ein Gleitlager zur radialen Lagerung der Pumpenwelle 6 bzw. des Pumpenrotors 7 bildet. Der Lagerabschnitt 10 kann dabei unmittelbar ein Teil der Pumpenrohrwandung, aber auch eine eigene eingesetzte Lagerbüchse sein.

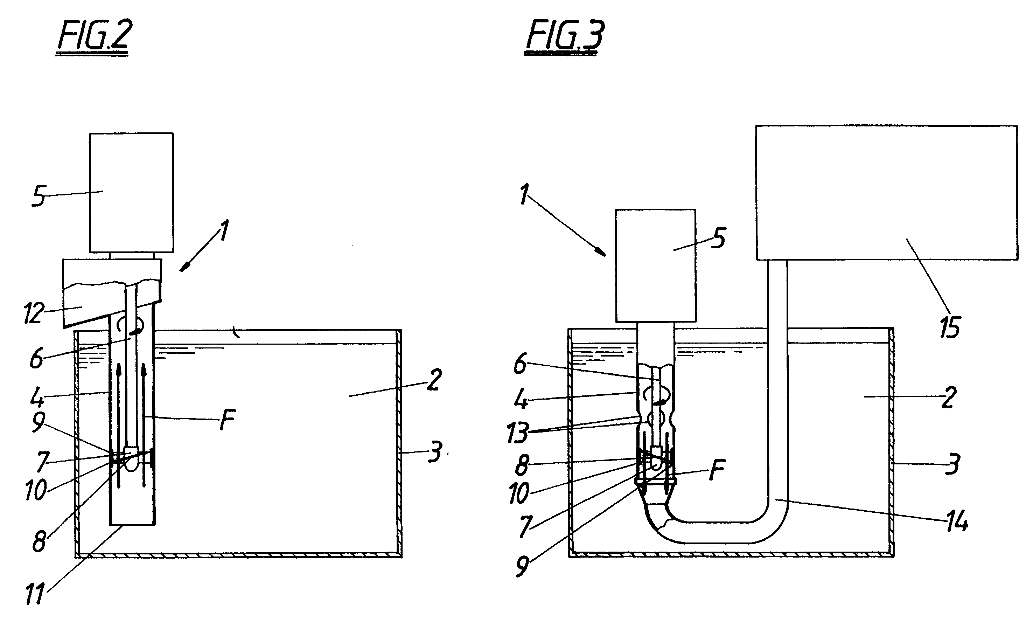

Gemäß dem Ausführungsbeispiel nach Fig. 2 ist der Pumpenrotor 7 mit aufwärtsgerichteten Fördersinn F in das Pumpenrohr 4 eingesetzt, das an seiner unteren offenen Stirnseite einen Schmelzeneinlauf 11 und oberhalb des Schmelzenbades 2 einen Schmelzenauflauf 12 aufweist, so daß die Axialpumpe 1 als Saugpumpe die Metallschmelze aus dem Schmelzenbad entnimmt und zum Schmelzenauslauf hochfördert.

Gemäß dem Ausführungsbeispiel nach Fig. 3 ist der Pumpenrotor 7 mit abwärts gerichteten Fördersinn F in das Pumpenrohr 4 eingesetzt, wobei im Pumpenrohr 4 oberhalb des Pumpenrotors 7 Einströmöffnungen 13 als Schmelzeneinlauf vorgesehen sind und an das Pumpenrohr 4 stirnseitig ein Druckrohr 14 zur Schmelzenförderung in einen anderen Schmeleznbehälter 15 od. dgl. anschließt, so daß hier die Axialpumpe 1 als Druckpumpe Verwendung findet.

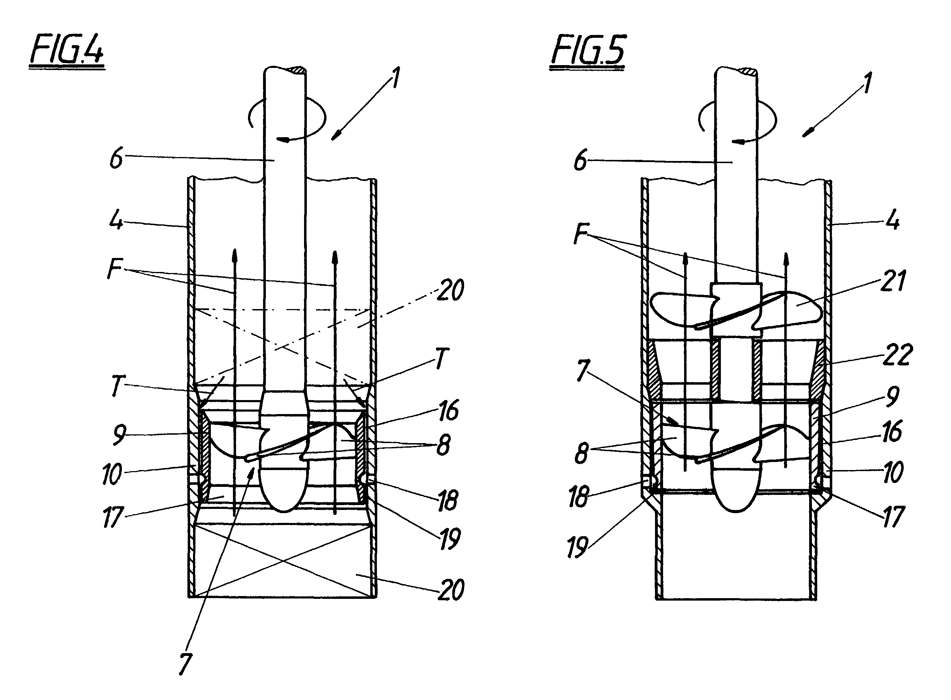

Wie in Fig. 4 angedeutet, greift der Lagerring 9 unter Freilassung eines Lagerspaltes 16 in den Lagerabschnitt 10 ein, so daß ein Teilstrom T der Schmelze in den Lagerspalt 16 eindringt und hier als Schmiermittel für das Gleitlager wirkt. Der Lagerabschnitt 10 weist im saugseitigen Randbereich 17 des Lagerringes 9 Abflußöffnungen 18 auf, die den Rückfluß des als Schmiermittel dienenden Schmelzenteilstromes nach außen ermöglichen, wobei zusätzlich zur Begrenzung der Rückströmung in diesem Randbereich 17 zwischen Lagerring 9 und Lagerabschnitt 10 eine Labyrinthdichtung 19 vorgesehen ist. Zur Vergleichmäßigung des Förderstromes kann dem Pumpenrotor 7 eine Leiteinrichtung 20 vor- bzw., wie strichpunktiert angedeutet, auch nachgeordnet sein.

Gemäß dem Ausführungsbeispiel nach Fig. 5 ist dem lagerringbestückten Pumpenrotor 7 ein zusätzlicher lagerringfreier Pumpenrotor 21 zugeordnet, wobei zwischen den beiden Pumpenrotoren ein Leitapparat 22 sitzt, wodurch eine zweistufige Axialpumpe entsteht.

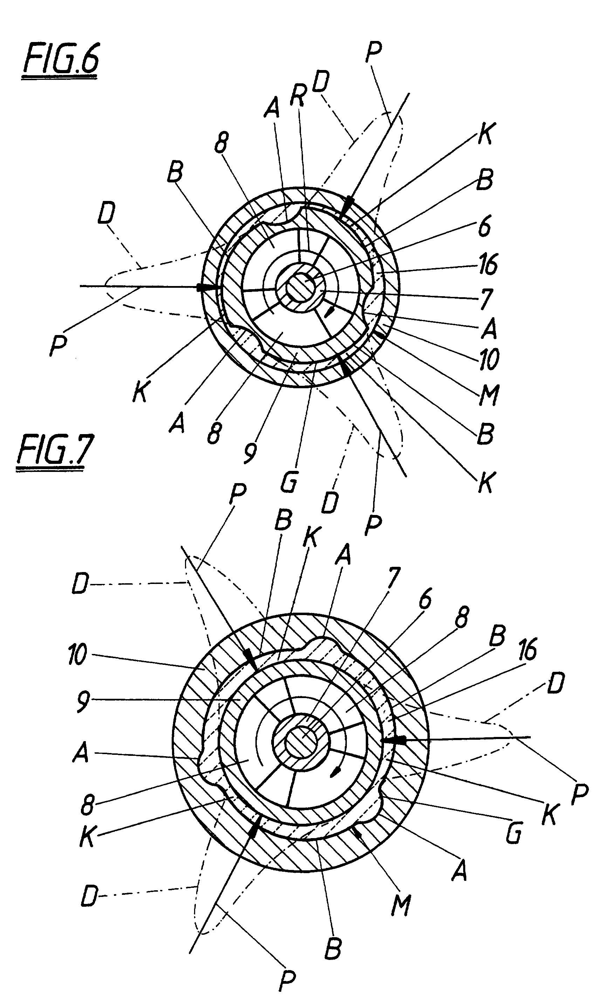

Wie in Fig. 6 und 7 veranschaulicht, ist das Pumpenwellengleitlager als Mehrflächengleitlager M ausgebildet, wozu der Lagerring 9 (Fig. 6) oder der Lagerabschnitt 10 (Fig. 7) profilierte Gleitflächen G aufweisen, die aus achsparallelen Erzeugenden bestehen. Die Gleitflächenprofile umfassen regelmäßig um den Umfang verteilte, von einem konzentrischen Kreis abweichende Krümmungsbereiche B und dazwischen rinnenförmige Ausnehmungen A, welche sich über den Umfang wiederholenden Profilausformungen einzelne voneinander getrennte Schmierkeile K innerhalb des Lagerspaltes 16 entstehen lassen, so daß im Bereich dieser Schmierkeile K bei Drehung R des Lagerringes 9 entsprechende Schmiermitteldrücke aufgebaut werden, deren Verläufe über die Gleitflächen in Umfangsrichtung durch die strichpunktierten Kurven D angedeutet sind. Durch diese Schmiermitteldruckkräfte, deren Resultierende P als Pfeile angedeutet sind, wird der Lagerring 9 gegenüber dem Lagerabschnitt 10 zentriert und stabilisiert, womit für die Pumpenwellenlagerung alle Vorteile eines Mehrflächengleitlagers genutzt werden können.

Die erfindungsgemäße Axialpumpe mit ihrer Kombination aus Pumpenrotor und außenliegendem Lagerring erlaubt eine Pumpenwellenlagerung mit in Relation zum Pumpenrohrdurchmesser größtmöglichem Lagerdurchmesser und einfachem, robustem Aufbau und sie gewährleistet aufgrund der Ausbildung des Pumpenwellenlagers als Mehrflächengleitlager einen laufruhigen Pumpenbetrieb und größte Fördergenauigkeit.

## Patentansprüche

1. Axialpumpe (1) zum Fördern von Metallschmelzen mit einem in die Schmelze eintauchenden Pumpenrohr (4) und einer innerhalb des Pumpenrohres (4) verlaufenden Pumpenwelle (6), wobei die einen schaufelbestückten Pumpenrotor (7) tragende Pumpenwelle (6) im rotorseitigen Endbereich über ein Gleitlager gelagert ist, das einen innenseitigen Lagerabschnitt (10) des Pumpenrohres (4) und einen unter Freihaltung eines Lagerspaltes (16) in den Lagerabschnitt (10) eingreifenden, zum Rotor (7) koaxialen und die Rotorschaufeln (8) außen umschließenden Lagerring (9) umfaßt, **dadurch gekennzeichnet, daß** der Lagerring (9) und/oder der Lagerabschnitt (10) profilierte Gleitflächen (G) aufweisen, welches Gleitflächenprofil in der Art eines Mehrflächengleitlagers (M) ausgebildet ist.

2. Axialpumpe nach Anspruch 1, **dadurch gekennzeichnet, daß** im saugseitigen Randbereich (17) des Lagerringes (9) zwischen dem Lagerring (9) des Pumpenrotors (7) und dem Lagerabschnitt (10) des Pumpenrohres (4) eine Dichtung, insbesondere eine Labyrinthdichtung (19), eingesetzt ist.

3. Axialpumpe nach Anspruch 1 oder 2, **dadurch gekennzeichnet, daß** der Lagerabschnitt (10) des Pumpenrohres (4) Abflußöffnungen (18) aufweist.

4. Axialpumpe nach einem der Ansprüche 1 bis 3, **dadurch gekennzeichnet, daß** dem lagerringbestückten Pumpenrotor (7) wenigstens ein zusätzlicher, gegebenenfalls lagerringfreier Pumpenrotor (21) zugeordnet ist.

5. Axialpumpe nach einem der Ansprüche 1 bis 4, **dadurch gekennzeichnet, daß** der Pumpenrotor (7) mit abwärts gerichtetem Fördersinn (F) in das Pumpenrohr (4) eingesetzt ist.

6. Axialpumpe nach einem der Ansprüche 1 bis 5, **dadurch gekennzeichnet, daß** der Pumpenrotor (7) mit veränderbarer Drehzahl oder mit über eine Förderperiode gesteuertem Drehzahlverlauf antreibbar ist.

## Claims

1. An axial pump (1) for conveying metal melts with a pump tube (4) immersed in the melt and a pump shaft (6) extending inside the pump tube (4), wherein the pump shaft (6), which carries a bladed pump rotor (7), is mounted in the end zone adjacent the rotor by means of a plain bearing which comprises an inside bearing section (10) of the pump tube (4) and a bearing ring which, while leaving a bearing gap (16) free, engages in the bearing section (10) and is coaxial to the rotor (7) and encloses the rotor blades (8) externally, **characterised in that** the bearing ring (9) and/or the bearing section (10) has/have profiled sliding surfaces (G), which sliding surface profile is constructed after the style of a multi-surface plain bearing (M).

2. An axial pump according to claim 1, **characterised in that** a seal, particularly a labyrinth seal (19), is inserted in the edge zone (17) of the bearing ring (9) on the intake side, between the bearing ring (9) of the pump rotor (7) and the bearing section (10) of the pump tube (4).

3. An axial pump according to claim 1 or 2, **characterised in that** the bearing section (10) of the pump tube (4) has outflow openings (18).

4. An axial pump according to any one of claims 1 to 3, **characterised in that** at least one additional pump rotor (21), without a bearing ring if required, is associated with the pump rotor (7) having the bearing ring.

5. An axial pump according to any one of claims 1 to 4, **characterised in that** the pump rotor (7) is inserted into the pump tube (4) with a downwardly directed conveying direction (F).

6. An axial pump according to any one of claims 1 to 5, **characterised in that** the pump rotor (7) is adapted to be driven at a variable speed or with a speed pattern controlled over a conveying period.

## Revendications

1. Pompe axiale (1) pour le transport de masses fondues métalliques, avec un tube de pompe (4) plongeant dans la masse fondue et un arbre de pompe (6) s'étendant à l'intérieur du tube de pompe (4), l'arbre de pompe (6), portant un rotor de pompe (7) muni de pales, étant monté dans la zone d'extrémité côté rotor par l'intermédiaire d'un palier à glissement, comprenant un tronçon de palier (10), situé côté intérieur, du tube de pompe (4) et une bague de palier (9), coaxiale au rotor (7) et entourant extérieurement les pales de rotor (8), s'engageant dans le tronçon de palier (10) en laissant subsister un intervalle de palier (16), **caractérisée en ce que** la bague de palier (9) et/ou le tronçon de palier (10) présentent des faces de glissement (G) profilées, le profil de faces de glissement étant réalisé à la manière d'un palier à glissement à plusieurs surfaces (M).

2. Pompe axiale selon la revendication 1, **caractérisée en ce que**, dans la zone de bordure (17), située côté aspiration de la bague de palier (9), entre la bague de palier (9) du rotor de pompe (7) et le tronçon de palier (10) du tube de pompe (4), est inséré un joint d'étanchéité, en particulier un joint d'étanchéité à labyrinthe (19).

3. Pompe axiale selon la revendication 1 ou 2, **caractérisée en ce que** le tronçon de palier (10) du tube de pompe (4) présente des ouvertures d'évacuation (18).

4. Pompe axiale selon l'une des revendications 1 à 3, **caractérisée en ce que**, au rotor de pompe (7) muni d'une bague de palier, est associé au moins un rotor de pompe (21) supplémentaire, le cas échéant exempt de bague de palier.

5. Pompe axiale selon l'une des revendications 1 à 4, **caractérisée en ce que** le rotor de pompe (7) est inséré dans le rotor de pompe (4), avec un sens de transport (F) orienté vers le bas.

6. Pompe axiale selon l'une des revendications 1 à 5, **caractérisée en ce que** le rotor de pompe (7) est susceptible d'être entraîné avec une vitesse de rotation variable ou avec une allure de vitesse de rotation issue d'une commande sur une période de transport.
